(19) Europäisches Patentamt
European Patent Office
Office européen des brevets

(11) Veröffentlichungsnummer: **0 014 412**
**B1**

(12) # EUROPÄISCHE PATENTSCHRIFT

(45) Veröffentlichungstag der Patentschrift: **02.03.83**

(51) Int. Cl.³: **C 08 G 63/24**, C 08 G 63/18, C 08 G 63/62, C 08 L 67/02, C 08 L 69/00

(21) Anmeldenummer: **80100430.0**

(22) Anmeldetag: **28.01.80**

(54) **Thermoplastische Massen und Verfahren zu ihrer Herstellung.**

(30) Priorität: **08.02.79 DE 2904832**

(43) Veröffentlichungstag der Anmeldung: **20.08.80 Patentblatt 80/17**

(45) Bekanntmachung des Hinweises auf die Patenterteilung: **02.03.83 Patentblatt 83/9**

(84) Benannte Vertragsstaaten: **DE FR GB IT NL**

(56) Entgegenhaltungen:
**EP-A-0 002 218**
**DE-A-1 420 232**
**DE-A-1 745 695**
**DE-A-1 794 053**
**STIN:**
**TEXT:**

(73) Patentinhaber: **BAYER AG, Zentralbereich Patente, Marken und Lizenzen, D-5090 Leverkusen 1, Bayerwerk (DE)**

(72) Erfinder: **Margotte, Dieter, Dr., Wedelstrasse 48, D-4150 Krefeld (DE)**

**EP 0 014 412 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt. wenn die Einspruchsgebühr entrichtet worden ist (Art. 99(1) Europäisches Patentübereinkommen).

# Thermoplastische Massen und Verfahren zu ihrer Herstellung

Gegenstand der vorliegenden Erfindung betrifft ein Verfahren zur Herstellung von Polyestern, insbesondere Polycarbonaten auf Basis von Diphenolen und Bis-säurehalogeniden, gegebenenfalls unter Mitverwendung von Kettenabbrechern und gegebenenfalls Kettenverzweigern, nach der bekannten Methode des Phasengrenzflächenverfahrens, bestehend aus wäßriger alkalischer Phase und inerter organischer Phase, das dadurch gekennzeichnet ist, daß man das Phasengrenzflächenverfahren in Gegenwart von in der organischen Phase gelösten, unter den Bedingungen des Phasengrenzflächenverfahrens inerten polymeren Verbindung durchführt.

Gegenstand der vorliegenden Erfindung sind außerdem die erfindungsgemäß erhältlichen polymeren Produkte.

Polymerlegierungen werden im allgemeinen durch Aufschmelzen und Mischen in Mischextrudern oder Knetern hergestellt. Auch das gemeinsame Lösen der Polymerkomponenten in einem Lösungsmittel und gemeinsame Ausdampfung in Ausdampfextrudern gehört zu den bekannten Techniken.

Ein Hauptnachteil vieler bekannter Legierungssysteme besteht darin, daß sich neben den gewünschten Eigenschaftsverbesserungen auch negative Einflüsse bemerkbar machen, die auf eine mehr oder weniger starke Unverträglichkeit der Polymerkomponenten untereinander zurückzuführen sind. Im allgemeinen wird beobachtet, daß die mechanischen Eigenschaften unter denen der theoretisch zu erwartenden Eigenschaften (durch arithmetische Ermittlung) liegen.

Es hat bislang nicht an Bemühungen gefehlt, die Verträglichkeit von Polymerlegierungen zu verbessern. Allerdings wurden zu diesem Zweck meist chemische Modifizierungen gewählt. So wurde z. B. versucht, die Verträglichkeit von Polycarbonat mit Vinylpolymerisaten durch eine radikalische Pfropfungsreaktion von z. B. Styrol auf ein unmodifiziertes Polycarbonat (siehe GB-PS 1 245 852) und ein Allylgruppen-haltiges Polycarbonat (siehe US-PS 3 692 870) zu verbessern. Auch durch Polykondensation von Polycarbonat auf ein aliphatisches OH-Gruppen-haltiges Vinylpolymerisat (US 3 461 187) bzw. auf ein aromatisches OH-Gruppen-haltiges Vinylpolymerisat (siehe US-PS 3 687 895) konnte die Verträglichkeit von Polycarbonat mit anderen Vinylpolymerisaten verbessert werden. Auch durch Zusätze, wie z. B. Block- oder Pfropfpolymerisate, die sowohl mit der einen wie auch mit der anderen Polymerphase verträglich sind (sogenannte Verträglichkeitsvermittler), wurden schon zur Verbesserung der Verträglichkeit von an sich unverträglichen Polymeren vorgeschlagen (G. Riess, J. Kohler, C. Tournut und A. Banderet, Makromolekulare Chemie 101 [1967], S. 58—73, und L. Bohn, Kolloid Zeitschrift und Zeitschrift für Polymere, Band 213, Heft 1—2, S. 55—67).

Es wurde nun überraschenderweise gefunden, daß die Verträglichkeit eines durch Polykondensation herstellbaren Polykondensats A mit einer polymeren Verbindung B auch ohne chemische Modifizierung und ohne Verwendung von Verträglichkeitsvermittlern dadurch erheblich verbessert werden kann, wenn die Polykondensationsreaktion zur Herstellung des Polykondensats A in Anwesenheit der polymeren Verbindung B durchgeführt wird.

Das erfindungsgemäße Verfahren wird analog dem bekannten Phasengrenzflächenverfahren zur Herstellung aromatischer Polycarbonate durchgeführt. Dieses Verfahren ist ausführlich beschrieben in z. B. »Kunststoff-Handbuch«, Band VIII, Seite 12 ff., und in »Chemistry and Physics of Polycarbonates«, Polymer Reviews, Band 9, S. 33 ff.

Im allgemeinen wird so verfahren, daß die in einer wäßrigen alkalischen Lösung gelösten Diphenole und gegebenenfalls Kettenabbrecher und gegebenenfalls Kettenverzweiger mit Bis-säurehalogeniden, insbesondere Bis-säurechloriden, in Gegenwart von Methylenchlorid, Chlorbenzol oder Mischungen daraus, worin die polymere Verbindung B gelöst ist, umgesetzt wird. Die Aufkondensation erfolgt nach dem in der obengenannten Literaturstelle beschriebenen Verfahren durch Zugabe von aliphatischen tertiären Aminen wie Triäthylamin oder N-Äthylpiperidin.

Das Verfahren kann in den bekannten Apparaturen, ein- oder zweistufig, kontinuierlich oder diskontinuierlich bei pH-Werten von 8—13 und Temperaturen von 0—80°C unter den bekannten Bedingungen durchgeführt werden.

Geeignete Diphenole zur Durchführung des erfindungsgemäßen Verfahrens sind z. B.:

Hydrochinon, Resorcin, Dihydroxydiphenyle,
Bis-(hydroxy-phenyl)-alkane,
Bis-(hydroxyphenyl)-cycloalkane,
Bis-(hydroxyphenyl)-sulfide,
Bis-(hydroxyphenyl)-äther,
Bis-(hydroxyphenyl)-sulfoxide,
Bis-(hydroxyphenyl)-sulfone,
Bis-(hydroxyphenyl)-ketone,
$\alpha,\alpha$-Bis-(hydroxyphenyl)-diisopropylbenzole,
sowie deren kernalkylierte und kernhalogenierte Verbindungen.

Diese und weitere geeignete Diphenole sind z. B. in den US-Patentschriften 3 028 365, 2 999 835, 3 148 172, 3 271 368, 2 991 273, 3 271 367, 3 280 078, 3 014 891 und 2 999 846, in den deutschen Offenlegungsschriften 1 570 703, 2 063 050, 2 063 052, 2 211 956, 2 211 957, der französischen Patentschrift 1 561 518 und in der Monographie »H. Schnell, Chemistry and Physics of Polycarbonates«, Interscience Publishers, New York, 1964, beschrieben.

Bevorzugte Diphenole sind beispielsweise:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Beispielsweise geeignete Bis-säurechloride sind die der allgemeinen Formel

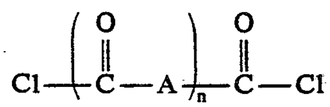

in der

n 0 oder 1,
A einen $C_6-C_{20}$-Arylen-Rest, einen $C_6-C_{20}$-Arylen-dioxy-Rest, einen $C_1-C_{10}$-Alkylen-Rest oder eine Einfachbindung bedeuten.

Bevorzugte Säurechloride sind: Phosgen, Oxalsäuredichlorid, Malonsäuredichlorid, Buttersäuredichlorid, Glutarsäuredichlorid, Suberinsäuredichlorid, Pimelinsäuredichlorid, Phthalsäuredichlorid, Isophthalsäuredichlorid und Terephthalsäuredichlorid.

Als Kettenabbrecher eignen sich die üblicherweise von der Herstellung von aromatischen Polycarbonaten bekannten phenolischen Verbindungen, wie beispielsweise Phenol selbst, oder Alkylphenole wie p-tert.-Butyl-phenol, p-Kresol, oder Halogenphenole, wie beispielsweise p-Chlorphenol oder p-Brom-phenol.

Als Kettenverzweiger werden die üblicherweise von der Herstellung von verzweigten aromatischen Polycarbonaten bekannten Verbindungen mit mehr als 2 funktionellen, unter den Bedingungen der Phasengrenzflächenpolykondensation reaktiven Gruppen, also beispielsweise Verbindungen auf drei oder mehr als drei phenolischen Hydroxylgruppen wie 1,3,5-Tri-(4-hydroxyphenyl)-benzol, Tri-(4-hydroxyphenyl)-phenylmethan oder 1,4-Bis-[(4',4''-dihydroxytriphenyl)-methyl]-benzol verwendet. Andere geeignete Verbindungen mit mehr als 2 funktionellen Gruppen sind beispielsweise Trimesinsäuretrichlorid, Cyanurchlorid und 3,3-Bis-(4-hydroxy-3-methyl-phenyl)-2-oxo-2,3-dihydroindol.

Die Ausgangsverbindungen zur Durchführung des erfindungsgemäßen Phasengrenzflächenverfahrens in Gegenwart einer polymeren Verbindung B werden so bemessen, als würden in bekannter Weise auf Basis von Diphenolen und Bis-säurechloriden Polycarbonate, Polycarbonsäureester oder Polycarbonsäureester-polycarbonate, also Verbindungen mit Kohlensäureesterstrukturen und Carbonsäureesterstrukturen in der Kette in beliebiger Reihenfolge sowohl statistisch als auch segmentiert angeordnet, mit mittleren Gewichtsmittelmolekulargewichten $\overline{M}n$ von etwa 20 000 bis 200 000 (bestimmt mittels Lichtzerstreuung nach bekannten Verfahren in Chloroform) hergestellt.

Dies gilt sowohl für die jeweils einzusetzende Menge an Säurehalogeniden als auch für die gegebenenfalls einzusetzende Menge an Kettenabbrecher, Katalysatormenge und die zu wählende Reaktionszeit und Reaktionstemperatur.

Gemäß der vorliegenden Erfindung geeignete polymere Verbindungen B sind solche, die in dem als organische Phase bei dem erfindungsgemäßen Verfahren eingesetzten Lösungsmittel löslich sind. Solche polymeren Verbindungen B sind z. B.

- alle durch radikalische Polymerisation hergestellten Vinylpolymerisate mit Gewichtsmittelmolekulargewichten von $\overline{M}_w = 150\,000$ bis 350 000 (gemessen durch Lichtzerstreuung in Chloroform);
- Polysulfone mit Gewichtsmittelmolekulargewichten $\overline{M}_w$ (gemessen durch Lichtzerstreuung in Chloroform) zwischen 1000 und 200 000, vorzugsweise zwischen 20 000 und 60 000;
- Polyaryläthersulfone, die hergestellt werden, indem man etwa äquimolare Mengen mindestens eines aromatischen Di-alkali-bis-hydroxylats und mindestens einer Bis-(4-halogenaryl)-Verbindung, deren Arylkerne durch mindestens eine Sulfonylgruppe verbunden sind, unter Mitverwendung von etwa 0,01 Mol-% bis etwa 2 Mol-%, vorzugsweise von etwa 0,05 Mol-% bis etwa 1,5 Mol-%, auf Bishydroxylat bzw. auf Bishalogenaryl-Verbindung, mindestens eines Verzweigers, also eines Alkalisalzes einer drei oder mehr als drei Hydroxylgruppen enthaltenden aromatischen Verbindung und/oder einer Halogenarylverbindung mit drei oder mehr als drei

unter den Reaktionsbedingungen der Polyaryläther-Sulfonherstellung substituierbaren arylgebundenen Halogensubstituenten miteinander umsetzt;

- Poly-(2,6-dialkyl-1,4-phenyloxide) mit Gewichtsmittelmolekulargewichten von 2000 bis 100 000, bevorzugt zwischen 20 000 und 60 000, und die nach bekannten Verfahren durch oxydierende Kondensation von 2,6-Dialkylphenolen mit Sauerstoff in Anwesenheit von Katalysatorkombinationen aus Kupfersalzen und tertiären Aminen erhalten werden (siehe beispielsweise DE-OS 2 126 434 und US-Patent 3 306 875);
- Polybutadiene mit Gewichtsmittelmolekulargewichten (gemessen durch Lichtzerstreuung in Chloroform) von 1000 bis 200 000, bevorzugt 80 000 bis 150 000);
- Polycarbonate mit Gewichtsmittelmolekulargewichten von 1000 bis 200 000, bevorzugt 10 000 bis 40 000 (gemessen durch Lichtzerstreuung in Chloroform).

Bevorzugte polymere Verbindungen B sind Polystyrol (Polystyrol 168 N, BASF), Styrol-Acrylnitrilcopolymerisate (Luran 368 R, BASF), kautschukmodifizierte Styrol-Acrylnitrilcopolymerisate (Luran S, BASF), Polymethylmethacrylat (Plexigum 7 H, Röhm), Polysulfone (Udel, UCC), Polycarbonate auf Basis aromatischer Dihydroxyverbindungen.

Bei dem erfindungsgemäßen Verfahren werden die polymeren Verbindungen B in dem für die Polykondensation geeigneten Lösungsmittel in solchen Mengen jeweils eingesetzt, daß nach erfolgter Polykondensation in dem Endprodukt ihr Gew.-Anteil zwischen 5 und 60, bevorzugt zwischen 10 und 40 Gew.-%, bezogen auf das Gesamtgewicht an polymerem Endprodukt, vorhanden ist. Die für das erfindungsgemäße Verfahren erforderlichen Lösungsmittelmengen sollen jeweils so bemessen sein, daß nach beendeter Phasengrenzflächenpolykondensation die Konzentration an Endprodukt zwischen etwa 5 und etwa 15 Gew.-%, bezogen auf Endprodukt und Lösungsmittel, beträgt.

Eine spezielle Verfahrensvariante für solche polymeren Verbindungen B, deren Herstellung in einem für das Verfahren der vorliegenden Erfindung geeigneten Lösungsmittel erfolgt, besteht darin, daß diese unmittelbar nach ihrer Herstellung ohne Isolierung für das erfindungsgemäße Verfahren verwendet werden können.

Eine besondere Verfahrensvariante besteht außerdem darin, daß als polymere Verbindung B die gleichen Produkte eingesetzt werden, die nach dem erfindungsgemäßen Phasengrenzflächenverfahren hergestellt werden sollen. Eine derartige Verfahrensweise bietet die Möglichkeit, daß gemäß dem erfindungsgemäßen Verfahren auch Polykondensate miteinander kombiniert werden können und daß polymere Endprodukte mit bimodaler oder polymodaler Verteilungsfunktion der Molekulargewichte erhältlich sind. So kann man z. B. nach dem erfindungsgemäßen Verfahren in Gegenwart eines in Methylenchlorid gelösten Polycarbonats mit einem Gewichtsmittelmolekulargewicht von ca. 25 000 ein zweites Polycarbonat mit einem Gewichtsmittelmolekulargewicht von etwa 70 000 synthetisieren, welches mit dem vorgelegten Polycarbonat zusammen ein polymeres Endprodukt mit einer bimodalen Verteilungsfunktion der Molekulargewichte bildet.

Die erfindungsgemäß erhältlichen polymeren Produkte zeichnen sich durch im Vergleich zu den über konventionelle Methoden hergestellten Mischungen deutlich verbesserten mechanischen Eigenschaften aus.

Die erfindungsgemäß erhältlichen polymeren Produkte sollen relative Lösungsmittelviskositäten (gemessen in Methylenchlorid bei 25° C und einer Konzentration von 5 g/l) zwischen 1,25 und 1,60, vorzugsweise zwischen 1,35 und 1,50, besitzen.

Die erfindungsgemäß erhältlichen polymeren Produkte sind nach üblichen Methoden zu Formkörpern und insbesondere auch zu Folien verarbeitbar; man kann ihnen bekannte Additive wie z. B. Hitzestabilisatoren, UV-Stabilisatoren und Flammschutzmittel sowie Verstärkerfüllstoffe wie z. B. Glasfasern oder Asbest zumischen.

Sie sind überall dort einsetzbar, wo die ihnen zugrunde liegenden Komponenten bzw. deren konventionelle Mischungen bislang eingesetzt werden, also im Automobilbau als Lenksäulenverkleidung, Armaturenbretter, Kühlergrill oder im Haushaltssektor zur Herstellung von Kaffeemaschinen, Eierkochern, Filtertassen usw. und im Elektrosektor als Lautsprecherabdeckungen.

Der Erfindungsgegenstand soll an folgenden Beispielen näher erläutert werden. Die angegebenen relativen Lösungsviskositäten sind, wie vorstehend ausgeführt, gemessen.

## Beispiel 1

### (Polymerkombination Polycarbonat/Styrol-Acrylnitril-Copolymerisat)

Beispielhaft für die Polykondensationsreaktion soll die Herstellung eines Polycarbonats auf Basis von 4,4'-Dihydroxy-diphenylpropan-2,2 (Bisphenol A) in Anwesenheit eines Styrolacrylnitril-Copolymerisats (Luran 368 R, BASF) beschrieben werden.

456 g Bisphenol A (2 Mol) und 9,5 g p-tert.-Butylphenol (0,063 Mol) werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15 Min. lang Stickstoff durch die

Reaktionsmischung geleitet wird. Dann werden 355 g 45%ige Natronlauge und eine Lösung von 218 g eines SAN-Copolymerisats (Luran 368 R, BASF, $\eta$rel 1,62) in 6500 g Methylenchlorid zugegeben.

Die Mischung wird auf 25° C abgekühlt. Unter Aufrechterhaltung dieser Temperatur durch Kühlen werden 237 g Phosgen während einer Zeitdauer von 120 Min. zugegeben. Eine zusätzliche Menge von 150 g einer 45%igen Natronlauge wird nach 15–30 Min. zugegeben, nachdem die Phosgenaufnahme begonnen hat. Zu der entstandenen Lösung werden 1,6 g Triäthylamin zugegeben und die Mischung weitere 15 Min. gerührt. Eine hochviskose Lösung wird erhalten, deren Viskosität durch Zugabe von Methylenchlorid reguliert wird. Die wäßrige Phase wird abgetrennt. Die organische Phase wird mit Wasser salz- und alkalifrei gewaschen. Die nach Abdampfen des Lösungsmittels entstandene Polymerkombination hat eine rel. Lösungsviskosität von 1,40.

Die rel. Viskosität wird gemessen in Methylenchlorid bei 25° C und einer Konzentration von 5 g/l.

Vergleichsbeispiel 1a)

In einem Vergleichsbeispiel wurden 70 Gew.-Teile eines Polycarbonats auf Basis von Bisphenol A mit einer rel. Lösungsviskosität von 1,30 mit 30 Gew.-Teilen Luran 368 R in einem 32er Doppelwellenextruder bei 280° C gemeinsam gemischt und granuliert. Die rel. Lösungsviskosität betrug 1,38. Einige charakteristische Eigenschaften sind in der folgenden Tabelle zusammengestellt.

| Mech. Eigenschaften | Prüfmethode nach DIN | Meß-einheit | Beispiel 1 | Beispiel 1a (Vergleich) |
|---|---|---|---|---|
| $\eta$ rel. | | | 1,40 | 1,38 |
| Vicat B | 53 460 | °C | 131 | 126 |
| Kerbschlagzähigkeit | 53 453 | kJ/m² | 15 | 7 |
| Schlagzähigkeit | 53 453 | kJ/m² | n. gebr.*) | n. gebr. |
| E-Modul | 53 457 | MPa | 2510 | 2680 |
| Fließnahtfestigkeit | 53 453**) | kJ/m² | 6 | 2 |

*) n. gebr. = nicht gebrochen.
**) In Anlehnung an DIN 53 453. Der Prüfkörper wird mit doppeltem gegenüberliegendem Anguß gespritzt und eine Schlagzähigkeitsprüfung nach DIN 53 453 durchgeführt.

Beispiel 2

(Kombination Polycarbonat/Polysulfon)

20 Gew.-Teile eines Polycarbonats auf Basis von Bisphenol A mit 1,3 Mol-% p-tert.-Butylphenol werden nach dem in Beispiel 1 beschriebenen Verfahren in Anwesenheit von 80 Gew.-Teilen eines Polysulfons (Udel 3500, UCC, $\eta$rel = 1,26) hergestellt.

Vergleichsbeispiel 2a)

In einem Vergleichsbeispiel wurden 20 Gew.-% eines Polycarbonats auf Basis von Bisphenol A mit einer rel. Lösungsviskosität von 1,75 mit 20 Gew.-% eines Polysulfons (Udel 3500, UCC, $\eta$rel = 1,26) in einem ZSK-Doppelwellenextruder bei 340° C vermischt und granuliert.

Die erfindungsgemäße Polymerkombination zeigt eine im Vergleich zu einer über eine Extrusion hergestellte Mischung eine deutliche Verbesserung der Spannungskorrosionsbeständigkeit, gemessen nach 10 Sek. Lagerung einer extrudierten Folie in einem Lösungsmittelgemisch aus 3 Teilen n-Propanol und 1 Teil Toluol. Nach der Lagerung wird die verbleibende Restdehnung nach DIN 53 504 bestimmt.

Die Einzelwerte sind der folgenden Tabelle zu entnehmen.

| | Ausgangsdehnung | | Restdehnung nach 10 sec Lagerung in Toluol/n-Propanol: 1 : 3 | |
|---|---|---|---|---|
| | Beisp. 2 | Beisp. 2a (Vergleich) | Beisp. 2 | Beisp. 2a (Vergleich) |
| η rel. | 1,38 | 1,36 | – | – |
| Dehnung, % | 100 | 105 | 90 | 50 |
| Zugfestigkeit, MPa | 90 | 85 | 80 | 45 |

Beispiel 3

(Kombination Polycarbonat/Polycarbonat)

85 Gew.-Teile eines Polycarbonats auf Basis von Bisphenol A mit 3,1 Mol-% p-tert.-Butylphenol werden in Anwesenheit von 15 Gew.-Teilen eines Polycarbonats auf Basis von Bisphenol A mit einer rel. Lösungsviskosität von 1,75 hergestellt.

Vergleichsbeispiel 3a)

85 Gew.-Teile eines Polycarbonats auf Basis von Bisphenol A mit einer rel. Lösungsviskosität von 1,32 werden mit 15 Gew.-Teilen eines Polycarbonats auf Basis von Bisphenol A mit einer rel. Lösungsviskosität von 1,75 in Methylenchlorid gemeinsam gelöst und über einen Ausdampfextruder isoliert. Die Spannungsrißkorrosionsbeständigkeit im Vergleich zu der erfindungsgemäßen Polymerkombination ist der folgenden Tabelle zu entnehmen:

| | Ausgangsdehnung | | Restdehnung nach 10 sec Lagerung in Toluol/n-Propanol: 1 : 3 | |
|---|---|---|---|---|
| | Beisp. 3 | Beisp. 3a (Vergleich) | Beisp. 3 | Beisp. 3a |
| η rel. | 1,42 | 1,40 | – | – |
| Dehnung, % | 120 | 120 | 110 | 75 |
| Zugfestigkeit, MPa | 85 | 80 | 80 | 55 |

Beispiel 4

(Kombination Polycarbonat/Polymethylmethacrylat)

60 Gew.-Teile eines Polycarbonats auf Basis von Bisphenol A mit 3,5 Mol-% p-tert.-Butylphenol werden in Anwesenheit von 40 Gew.-Teilen eines Polymethylmethacrylats mit einer rel. Lösungsviskosität von 1,58 analog Beispiel 1 hergestellt. Die rel. Lösungsviskosität des polymeren Endproduktes beträgt 1,43.

Beispiel 5

(Kombination Polycarbonat/Poly-(2,6-dimethyl-1,4-phenylenoxid)

90 Gew.-Teile eines Polycarbonats auf Basis von Bisphenol A mit 3,1 Mol-% p-tert.-Butylphenol werden in Anwesenheit von 10 Gew.-Teilen eines Poly-(2,6-dimethyl-1,4-phenylenoxids) mit einer rel. Lösungsviskosität von 1,27 analog Beispiel 1 hergestellt. Die rel. Lösungsviskosität des polymeren Endproduktes beträgt 1,28.

Beispiel 6

(Kombination aromatischer Polyester/Styrol-Acrylnitril-Copolymerisat)

1824 g Bisphenol A (8 Mol) werden zusammen mit 21,6 g p-tert.-Butylphenol (0,14 Mol) in 1475 g 45%iger Natronlauge (16,6 Mol) gelöst. Dann gibt man eine Lösung aus 716 g eines Styrol-Acrylnitril-Copolymerisats (Luran 368 R, BASF, $\eta rel = 1{,}62$) in 25,7 kg Methylenchlorid zu. Anschließend wird innerhalb von 15 Min. bei Zimmertemperatur eine Lösung von 812 g Isophthalsäuredichlorid (4 Mol) und 812 g Terephthalsäuredichlorid (4 Mol), gelöst in 6500 g Methylenchlorid, zugetropft. Nach beendeter Reaktion wird die Emulsion getrennt und die organische Phase mit Phosphorsäure und anschließend mit Wasser neutral gewaschen. Das Endprodukt hat eine rel. Lösungsviskosität von 1,41.

Vergleichsbeispiel 6a)

8000 g eines gemäß Beispiel 6 hergestellten aromatischen Polyesters (ohne Anwesenheit eines Styrol-Acrylnitril-Copolymerisats) mit einer rel. Lösungsviskosität von 1,36 werden mit 200 g eines Styrol-Acrylnitril-Copolymerisats (Luran 368 R, BASF, $\eta rel = 1{,}62$) in einem 32er Doppelwellenextruder bei 300° C homogenisiert und granuliert. Das Compound hat eine rel. Lösungsviskosität von 1,41. Einige mechanische Eigenschaften sind in der folgenden Tabelle zusammengestellt.

| Mech. Eigenschaften | Prüf-methode nach DIN | Meß-einheit | Beispiel 6 | Beispiel 6a (Vergleich) |
|---|---|---|---|---|
| $\eta$ rel. | | | 1,42 | 1,41 |
| Schlagzähigkeit | 53 453 | kJ/m$^2$ | 68 | 52 |
| Kerbschlagzähigkeit | 53 453 | kJ/m$^2$ | 7 | 3 |
| Vicat B | 53 460 | °C | 156 | 142 |

**Patentansprüche**

1. Verfahren zur Herstellung von Polyestern auf Basis von Diphenolen und Bis-säurehalogeniden gegebenenfalls unter Mitverwendung von Kettenabbrechern und gegebenenfalls Kettenverzweigern nach der bekannten Methode des Phasengrenzflächenverfahrens, bestehend aus wäßriger alkalischer Phase und inerter organischer Phase, dadurch gekennzeichnet, daß man das Phasengrenzflächenverfahren in Gegenwart von in der organischen Phase gelösten, unter den Bedingungen des Phasengrenzflächenverfahrens inerten polymeren Verbindung durchführt, wobei diese in solchen Mengen jeweils eingesetzt wird, daß nach erfolgter Polykondensation ihr Gew.-Anteil in dem Endprodukt zwischen 5 und 60 Gew.-% ist, und wobei die Endprodukte relative Lösungsviksositäten zwischen 1,25 und 1,60 besitzen.
2. Verfahren zur Herstellung von Polycarbonaten auf Basis von Diphenolen und Bis-säurehalogeniden gemäß Anspruch 1.
3. Polymere Produkte, erhältlich gemäß Verfahren der Ansprüche 1 und 2.

**Claims**

1. Process for the preparation of polyesters based on diphenols and bis-acid halides, optionally with the additional use of chain stoppers and, optionally, chain-branching agents, by the known method of the phase boundary process, comprising an aqueous alkaline phase and an inert organic phase, characterised in that the phase boundary process is carried out in the presence of a polymeric compound which is dissolved in the organic phase, is inert under the conditions of the phase boundary process and is used in each case in amounts such that, after the polycondensation reaction has taken place its proportion by weight in the end product is between 5 and 60% by weight, and the end products have relative solution viscosities of between 1.25 and 1.60.
2. Process for the preparation of polycarbonates based on diphenols and bis-acid halides, according to Claim 1.
3. Polymeric products obtainable according to the process of Claims 1 and 2.

**Revendications**

1. Procédé de production de polyesters à base de diphénols et de bis-halogénures d'acides, le cas échéant avec utilisation simultanée d'agents de terminaison de chaîne et, éventuellement, d'agents de ramification de chaîne selon les principes connus du procédé à l'interface entre phases, comprenant une phase alcaline aqueuse et une phase organique inerte, caractérisé en ce qu'on met en oeuvre le procédé à l'interface entre phases en présence d'un composé polymérique dissous dans la phase organique, inerte dans les conditions du procédé à l'interface entre phases, en utilisant ce composé dans chaque cas en quantités telles que lorsque la polycondensation a été effectuée, sa teneur en poids dans le produit final se situe entre 5 et 60%; et que les produits finals possèdent des viscosités relatives en solution comprises entre 1,25 et 1,60.

2. Procédé de production de polycarbonates à base de diphénols et de bis-halogénures d'acides selon la revendication 1.

3. Produits polymériques pouvant être obtenus conformément au procédé des revendications 1 et 2.